# EUROPEAN PATENT SPECIFICATION

(11) **EP 4 245 119 B1**
(45) Date of publication and mention of the grant of the patent: **05.06.2024**
(21) Application number: 23159960.6
(22) Date of filing: 03.03.2023
(51) Int. Cl.: A01D 45/00, A01D 46/20, B61D 3/04, B61D 15/00, B66F 7/06, B66F 11/04, F16M 11/04, F16M 11/18, F16M 11/22, F16M 11/38, F16M 11/42

(54) **TUBE RAIL CART**
SCHLAUCHSCHIENENWAGEN
CHARIOT À RAILS TUBULAIRES

(30) Priority: 16.03.2022 BE 202205183
(43) Date of publication of application: 20.09.2023
(73) Proprietor: B&A Automation BVBA, 2320 Hoogstraten (BE)
(72) Inventor: BOGAERTS, Joris, 2960 Brecht (BE)
(74) Representative: Van hunsel, Lieven M.S.

(56) References cited:
- CN-A- 111 115 500
- CN-A- 113 212 479
- CN-U- 209 635 845
- CN-U- 210 519 478

## Description

The present invention relates to a tube rail cart.

In particular, the invention is intended for a tube rail cart in a tube rail system as used in horticulture for cultivating and harvesting crops in greenhouses, such as flowers, tomatoes or the like.

Traditionally in such cultivations, the crops are cultivated in parallel rows between which heating tubes are mounted.

Said heating tubes are also used as rails for moving the tube rail carts between the crops. The crops can be treated, pruned or harvested from these tube rail carts, either by workers or automatically.

Such tube rail carts are therefore often provided with all kinds of accessories such as leaf sliders for removing pruning waste, harvest bins, a sprinkler system or the like.

Traditionally, tube rail carts are provided with four flanged wheels with which the tube rail cart can move forward or is moved forward on the rails of the heating tubes.

For moving on a concrete path or the like, the tube rail carts are sometimes also provided with one or more swivel castors, as specified in Belgian patent application 2021/5803.

A disadvantage is that the classic tube carts have a fixed platform with a fixed height. However, different actions require different working heights. The working height for harvesting tomatoes is not the same as the working height for cutting leaves, for example.

Furthermore, not all workers are as tall such that they sometimes have to work in an unergonomic position for a longer period of time.

Tube carts with a scissor lift such that different working heights can be reached are also known.

However, the known tube carts with a scissor lift are adjusted in height hydraulically or electrically.

Consequently, said tube carts are heavy, expensive and require specialist maintenance.

Such tube cart with hydraulic scissor lift and electric drive is known from CN209635845U and CN113212479A, for example.

A scissor lift with manual height adjustment is known from CN210519478U and CN111115500A. However, the height adjustments disclosed in said documents are cumbersome in use and furthermore changing the height with said height adjustments is very time-consuming.

The purpose of the present invention is to provide a solution to the aforementioned and other disadvantages.

To this end, the invention relates to a tube rail cart comprising a chassis and scissor lift mounted thereon with a manually height-adjustable platform between a lowered position with minimum height and an extended position with maximum height and which is provided with a lock for locking the platform in several height positions, whereby the lock comprises two different locking mechanisms, respectively a first locking mechanism for locking the platform in an intermediary position between the lowered position and the extended position and a second locking mechanism for locking the platform in the extended position.

This has the advantage that the scissor lift can be executed very compactly and particularly affordably.

Furthermore, there is no need for an electric or hydraulic drive of the scissor lift, which not only saves on weight but also cost of maintenance.

The scissor lift is very simple to adjust in height and this with a minimum of muscle strength.

In a preferred embodiment, the platform is lockable using the first locking mechanism in one or more height positions between the intermediary position and the lowered position and the platform is lockable in one or more height positions between the intermediary position and the extended position using the second locking mechanism.

The two different locking mechanisms allow the platform to be locked at both low and high heights.

Preferably, the first and the second locking mechanism are controlled by one and the same control device.

This allows a very simple control of the height adjustment of the scissor lift.

According to the invention, preferably the number of different height positions is located between two and fifteen, ideally the platform can be locked in seven different height positions.

Such number of different height positions offers the worker more than a sufficiently big choice of height positions which are not only dependent on the type of work the worker must perform but also on the size of the worker.

In the case of seven different height positions, preferably the first three height positions, starting with the lowered position, are lockable with the first locking mechanism and the other four height positions are lockable with the second locking mechanism.

This allows a stepped but almost linear height adjustment between the lowered and extended position.

In a preferred embodiment, the scissor lift is formed by two pairs of legs which are each hingeably connected to each other around a centrally located pivotal point and whereby two of the lower ends of the scissor lift are hingeably connected to the chassis.

Preferably, the two other lower ends are then provided with a slider or roller guide for moving the legs on the chassis and whereby the platform is mounted freely hingeably on two of the upper ends of the legs.

In the most preferred embodiment, the platform is hingeably connected around the upper ends of the legs which are hingeably connected to the chassis.

This allows the legs of the scissor lift to move in a simple way relative to each other and consequently to adjust the angle of the scissor lift.

Preferably, the platform is executed as a flat panel.

This allows a simple construction of the platform.

Preferably, the control device comprises a rod with a rotatable handle with a spring therein. The rotational movement of the handle is guided by one or more slots in the handle which cooperate with one or more bolts which are provided on a frame to this end on which the platform is mounted.

According to a special aspect of the invention, the scissor lift is provided next to an elevation of the chassis.

The end of the rod, opposite to the end on which the handle is provided, can cooperate with one or more holes in the elevation of the chassis to form the first locking mechanism.

The consequence of rotating the handle is that the rod is pulled in the direction away from the elevation. A simple rotation of the handle consequently unlocks the first locking mechanism.

Furthermore, the handle can be used to guide the platform upward or downward until the desired height position is reached.

In a preferred embodiment a passage is provided in the flat panel, along which the handle is accessible. Consequently, the handle can also be controlled from above. Preferably, said passage is covered by a removable or hingeable hatch, which prevents a user from stepping in the passage with their foot and possibly hurting themselves or losing their balance.

Preferably, the horizontal frame is provided with one or more grooves that can cooperate with one or more bushings provided on the upper ends of the legs of the scissor lift to form the second locking mechanism.

As the elevation of the chassis is limited in height, positions higher than the intermediary position cannot be locked with the first locking mechanism, to this end the tube rail cart is equipped with the second locking mechanism.

This allows more height positions.

In a preferred embodiment, the scissor lift is provided with one or more gas springs.

This has the advantage that the platform will not drop down abruptly when the platform is unlocked. Furthermore, the one or more gas springs help to propel the platform upwards.

Consequently, the worker or labourer does not have to bear the weight of the platform when adjusting the height of the platform which is considerably more ergonomic.

Preferably, the tube rail cart comprises four flanged wheels, of which two driven wheels and two idler wheels and whereby two swivel castors are provided on a width-adjustable suspension which is located on the side of the idler wheels.

This has the advantage that the tube rail cart is able to drive on the heating tubes with its four flanged wheels but that the tube rail cart is manoeuvrable with its swivel castors over a concrete path or the like. Because of the low arrangement of the swivel castors, the idler wheels do not make any contact with the surface when the tube rail cart is moved forward on a concrete path or the like.

The width-adjustable suspension of the swivel castors allows the swivel castors to be set sufficiently far outside the heating tubes such that they do not constitute a hindrance when the tube rail cart is moved forward on the heating tubes.

Preferably, the idler wheels are located between the swivel castors and the driven wheels.

Preferably, the chassis and/or the platform are provided with one or more tubes for mounting attachments which are necessary for harvesting crops, pruning activities and the like, such as a leaf slider or harvest bin.

This allows the tube rail cart to be provided in a quick and handy way with extra features and applications specific to harvesting and tending to crops.

Preferably, the platform can also be interchangeable depending on the mounted features for harvesting and tending to crops.

This has the advantage that the tube rail carts can be developed more uniformly and that the functionalities can be applied and changed depending on the task that needs to be performed with them.

Consequently, fewer different types of tube rail carts are required which implies considerable cost savings.

Preferably, the platform has one or more pedals which control the drive of the tube rail cart.

This allows a handy control of the tube rail cart using one's feet, such that the hands of the worker remain free for performing the work, for example pruning or harvesting crops.

With the intention of better showing the characteristics of the invention, a preferred embodiment of a tube rail cart according to the invention is described hereinafter, by way of an example without any limiting nature, with reference to the accompanying drawings wherein:
figure 1 schematically shows a perspective view of a tube rail cart according to the invention in different views;
figure 2 to 8 show different height positions of the tube rail cart;
figure 9 shows a frame with scissor lift and control device;
figure 10 shows an alternative embodiment of the tube rail cart provided with leaf sliders;
figure 11 shows an alternative embodiment of the tube rail cart provided with rose harvest bins;
figure 12 shows a detail of a control device that is made partly transparent.

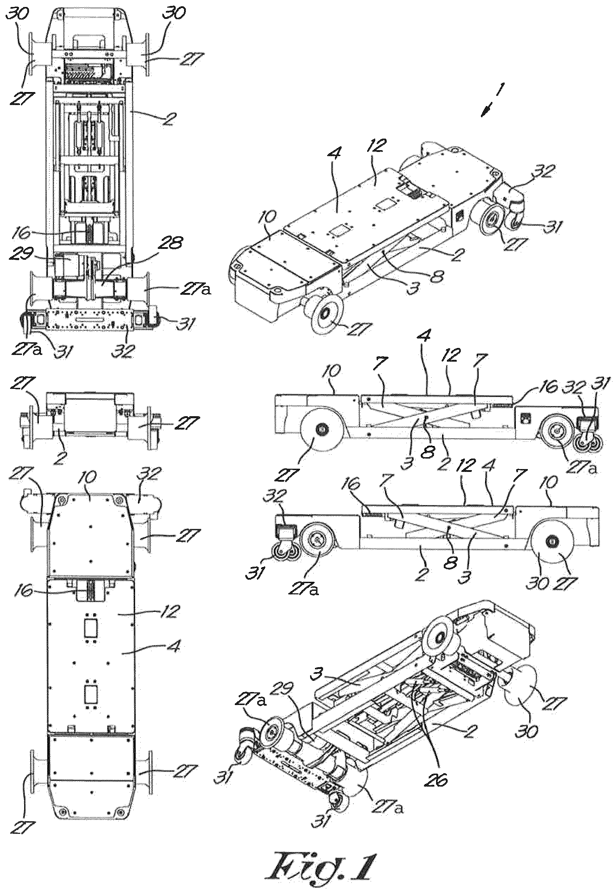

The tube rail cart 1 shown in figure 1 comprises a chassis 2 and a scissor lift 3 mounted thereon with a manually height-adjustable platform 4.

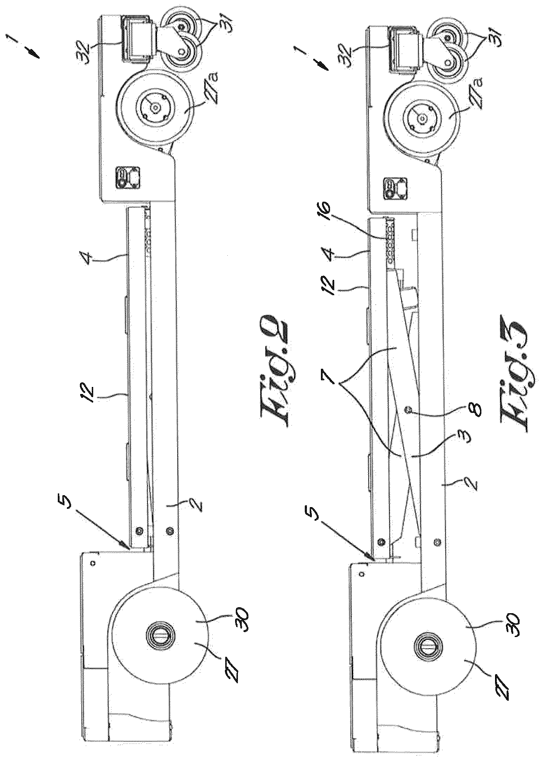

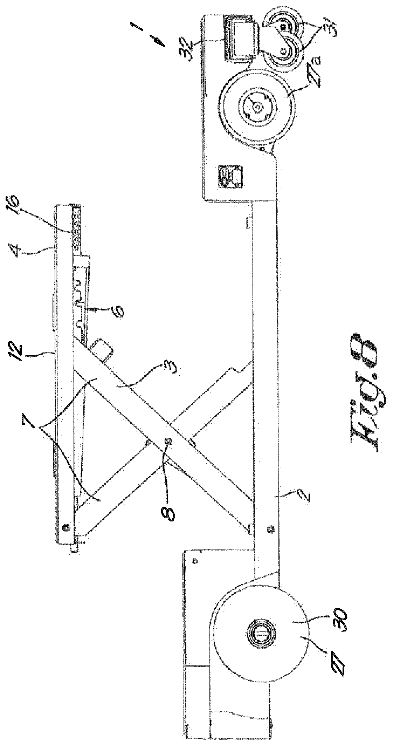

Said platform 4 is adjustable between a lowered position with minimum height, as shown in figure 2 and an extended position with maximum height, as shown in figure 8.

The tube rail cart 1 is provided with a lock for locking the platform 4 in several height positions.

According to a special aspect of the invention, the lock comprises two locking mechanisms, a first locking mechanism 5 and a second locking mechanism 6 respectively.

The first locking mechanism 5 is used to lock the platform 4 in an intermediary position. This is a position located between the lowered position and the extended position.

The second locking mechanism 6 serves as a lock of the platform 4 in the extended position.

In this case, but not necessarily, the platform 4 is also lockable using the first locking mechanism 5 in a position between the lowered position and the intermediary position, which is shown in figure 3.

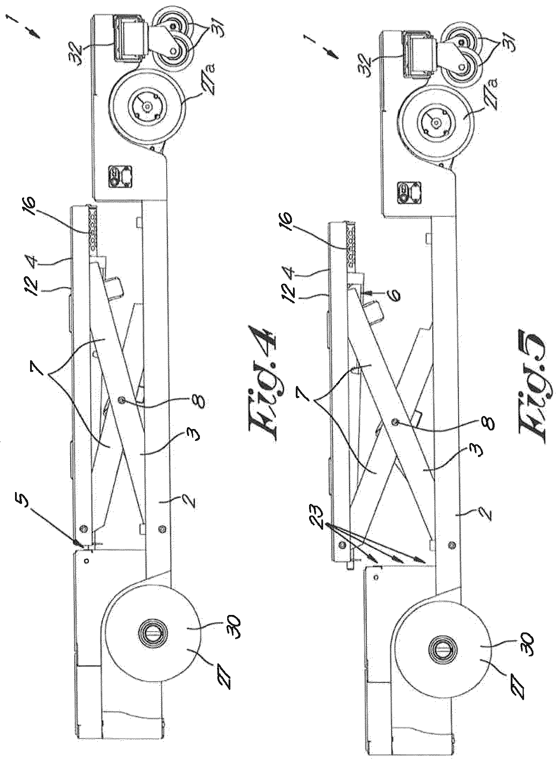

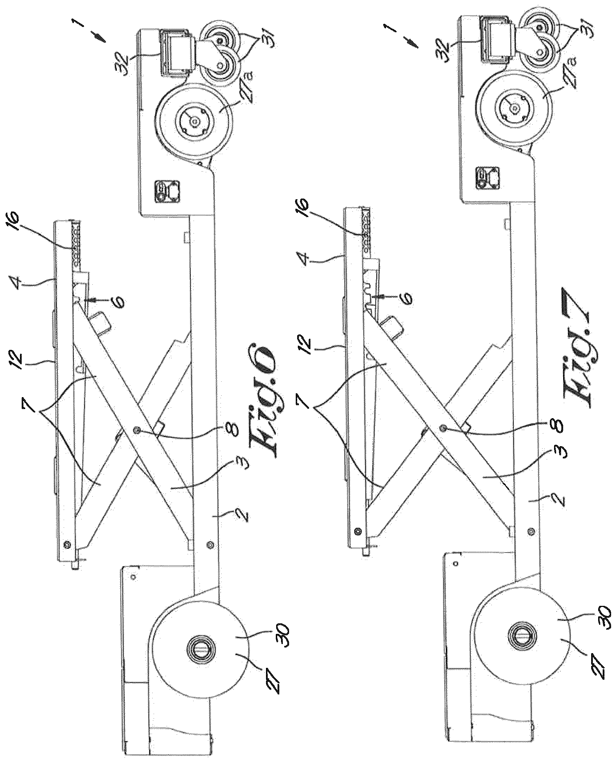

Figures 5 to 7 show that in this case the platform 4 is also lockable in different height positions between the intermediary position and the extended position and this using the second locking mechanism 6.

It is understood that both with the first and the second locking mechanism 6, more or fewer intermediate height positions could be developed and that there are not necessarily seven different height positions.

In other words, it is thus not necessary either that, in the case of seven height positions like in the embodiment shown, the first three height positions are lockable with the first locking mechanism 5 and the other four with the second locking mechanism 6.

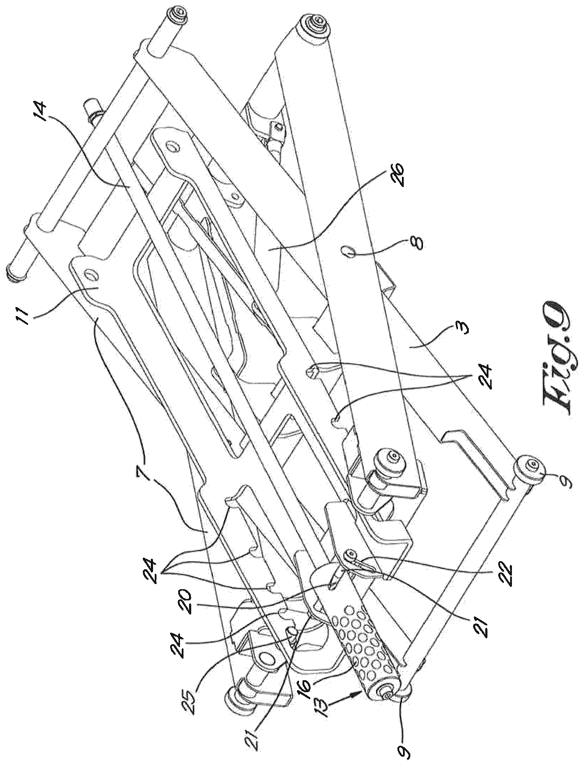

Figure 9 shows the scissor lift 3 and the frame 11 separately. Note in this case that the scissor lift 3 is formed by two pairs of legs 7 which are each hingeably connected to each other around a centrally located pivotal point 8.

Two of the lower ends of the scissor lift 3 are hingeably connected to the chassis 2 whereas the other two lower ends are provided with a roller guide 9 for moving on the chassis 2.

Note that the aforementioned roller guide 9 can also be executed in other ways, for example as slider guide.

The frame 11 is mounted freely hingedly on two of the upper ends of the legs 7 of the scissor lift 3. In this case but not necessarily around the upper ends of the legs 7 which are hingedly connected to the chassis 2.

The scissor lift 3 is provided next to an elevation 10 of the chassis 2, which is clearly shown in figures 1 to 8.

The platform 4, which is executed as a flat panel 12, is mounted on top of the frame 11.

According to the invention, both the first locking mechanism 5 and the second locking mechanism 6 are controlled by one and the same control device 13.

Said control device 13 is shown in figure 9 together with the scissor lift 3 and the frame 11. The control device 13 comprises a rod 14 whose thickened end 15 is enclosed in a handle 16. Said thickened end 15 is provided with a peg 17 in the extension of the rod 14. Over said peg 17 a spring 18 is mounted which is tensioned in a chamber 19 of the handle 16.

The handle 16 is provided with two slots 20 in which two bolts 21 of the frame 11 are slidably mounted.

Using the slots 20, a rotational movement of the handle 16 is transposed into a shift of the bolts 21 in the openings 22.

The shift of the bolts 21 in the openings 22 ensures that the frame 11 is guided upward when the handle 16 is rotated.

The end of the rod 14, opposite to the end on which the handle 16 is provided, can cooperate with one or more holes 23 in the aforementioned elevation 10 of the chassis 2. In this way the first locking mechanism 5 is formed.

The horizontal frame 11 is, in this case, but not necessarily, provided with five grooves 24. Said grooves 24 can cooperate with two bushings 25 provided on the upper ends of the legs 7 which are hingedly connected to the chassis 2, to form the second locking mechanism 6.

In the bottom view of figure 1 it is clearly shown that, in this case, but not necessarily, two gas springs 26 are used.

Said gas springs 26 prevent the platform 4 from suddenly dropping when adjusting the height position and furthermore help to move the platform 4 upward when it is unlocked.

The different views of figure 1 also show that the tube rail cart 1 comprises four flanged wheels 27, two of which on a communal shaft 28 which is driven by an electric motor 29. These are the driven flanged wheels 27A. The other two flanged wheels 27 are so-called idler wheels 30 and do not have a drive.

The shown flanged wheels 27 are outer flange wheels 27, but inner flange wheels are also possible of course. Also note that the driven flanged wheels 27A could be provided with a separate electric motor 29 and separate shaft.

Apart from the four flanged wheels 27, two swivel castors 31 can also be distinguished. These are mounted on a width-adjustable suspension 32. Said adjustable suspension 32 is provided at the side of the tube rail cart 1 on which the idler wheels 30 are also mounted.

In fact, the idler wheels 30 are located here between the swivel castors 31 and the driven flanged wheels 27A.

According to a special aspect of the invention, the chassis 2 and/or the platform 4 can also be provided with one or more tubes 33 for mounting attachments 34 which are handy for harvesting crops, pruning activities and the like.

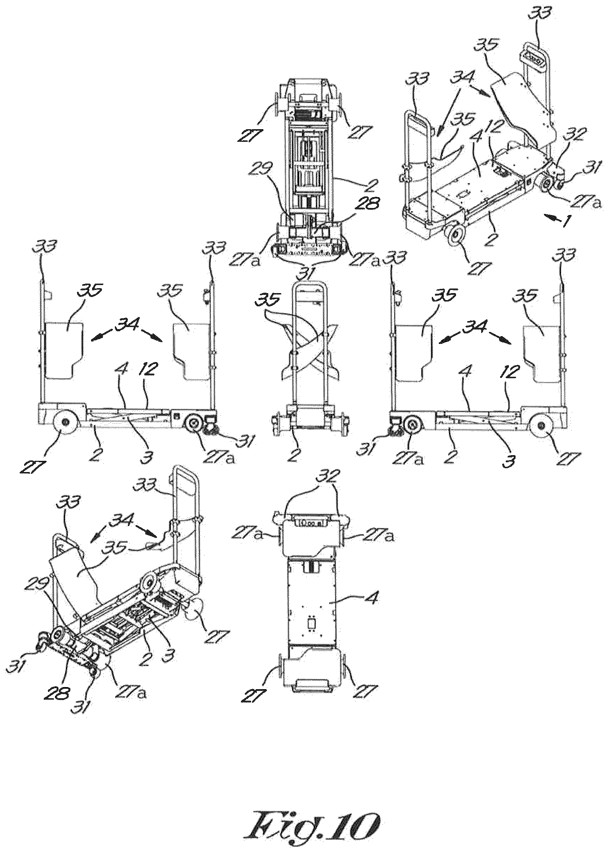

Figure 10 shows different views of a tube rail cart 1 according to the invention with said tubes 33 along both sides of the platform 4 on each of which a leaf slider 35 is mounted in this case. This is particularly useful for pruning activities. Indeed, cut leaves are then guided down to the ground using the leaf slider 35, where they can be simply swept up.

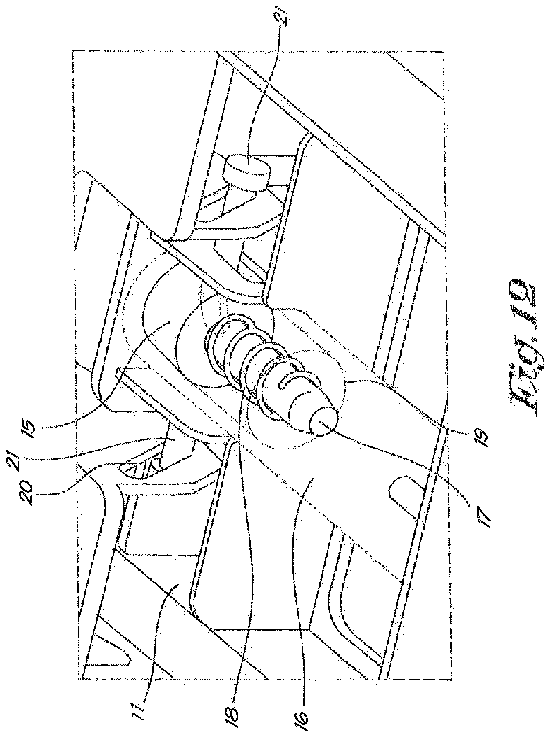

An alternative embodiment is shown in figure 12. Here, said tubes 33 are mounted on the platform 4 and provided with rose harvest bins 36. Harvested roses can thus be simply stored in said bins 36.

Note that both the leaf sliders 35 and the rose harvest bins 36 are height-adjustable along the tubes 33. This allows a worker to always set said tools to an ideal height.

In the case of the rose harvest bins 36, apart from being height-adjustable, they are also tiltable and this in a very simple manner.

Furthermore, the platform 4 can also be executed interchangeably depending on the functionalities mounted thereon that are required at that moment.

Furthermore, the platform 4 can have pedals which control the drive of the tube rail cart 1.

The operation of the tube cart with height-adjustable platform 4 is very simple and as follows.

The platform 4 is, for example, locked on the intermediary position whereas the worker or user wants to set the platform 4 one position lower.

To this end, the worker takes hold of the handle 16 and executes a short rotational movement. The rotational movement is guided by the slots 20 in the thickened end 15 of the rod 14 and the handle 16 and as a result of said rotational movement the spring 18 in the chamber 19 is tensioned further. The slots 20 in the thickened end 15 ensure that the rotational movement of the handle 16 is transposed into an axial displacement of the rod 14.

Consequently, the rotational movement ensures that the rod 14 is pulled from a hole 23 of the chassis 2. The first locking mechanism 5 is now unlocked and the platform can be moved upward and downward freely.

The worker holds the handle 16 in said rotated position to prevent the handle 16 from rotating back under the influence of the spring 18 such that the rod 14 would move back in the opposite axial direction in the direction of the hole 23.

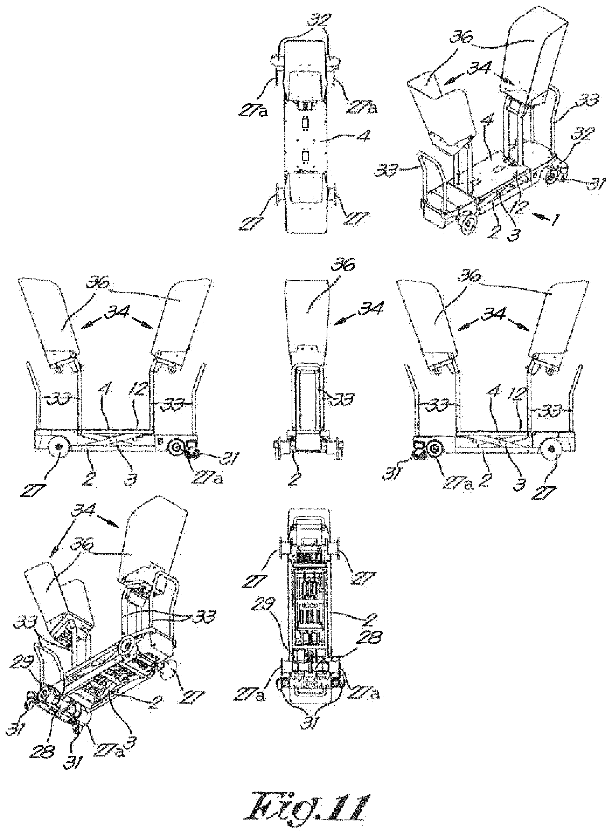

The assembly of handle 16, thickened end 15 of the rod 14, the chamber 19 with peg 17 and spring 18 are clearly shown in figure 11, where the handle 16 is shown in a transparent way.

As aforementioned the platform 4 can now be moved upward and downward. The worker can realise this in a simple way with the handle 16, by moving said handle 16 upward and downward. The platform will not drop abruptly and is furthermore simple to move upward and downward using the gas springs 26.

In this case, the worker moves the platform 4 one position lower. When the platform 4 is at the level of the desired position, the worker cancels the reverse rotational movement by rotating the handle 16 in the opposite direction or by simply letting go of the handle 16. Said opposite rotational movement is aided under the influence of the previously tensioned spring 18.

The rod 14 now rotates back to its original resting position, such that the rod 14 again undergoes an axial displacement, this time toward the elevation 10 of the chassis 2. The end of the rod 14 now moves in a hole 23 that is subjacent to the hole 23 of the intermediary position. The platform 4 is locked again now, but this time in a lower position. The lock with rod 14 and hole 23 is the first locking mechanism as described above.

If the user subsequently wants to raise the platform 4 to a height position that is higher than the intermediary position he or she rotates the handle 16 again. The first locking mechanism 5 unlocks the platform 4 as above, after which the user lifts the platform 4 to the desired height using the handle 16.

For height positions above the intermediary position, there is no possibility to lock the platform 4 with the first locking mechanism 5. Indeed, the elevation 10 of the chassis 2 is limited. Consequently, the rod 14 can no longer be slid in a hole 23 of said elevation 10.

To this end the tube rail cart 1 is provided with the second locking mechanism 6. The user unlocks the platform 4 with a rotational movement of the handle 16 and lifts the platform 4 to the desired height position.

During the rotational movement of the handle 16 not only the first but at the same time also the second locking mechanism 6 unlocks. This is because the slots 20 in the handle 16 not only ensure an axial displacement of the rod 14 but also a displacement of the bolts 21 according to the same direction as the rod 14. The displacement of the bolts 21 guides the frame 11 upward via the openings 22.

The user subsequently rotates the handle 16 in the opposite direction or simply lets go of the handle 16. The spring 18, which is tensioned in the chamber 19, will move the rod 14 and consequently also the bolts 21 back in the opposite direction. The frame 11 subsequently is lowered onto the bushings 25 which are provided on the legs 7.

Said bushings 25 hook into the grooves 24 of the frame 11 as it were such that the frame 11 is locked. To leave said height position again, rotating the handle 16 such that the frame 11 is lifted a few centimetres again and the bushings 25 no longer hook into the grooves 24, suffices.

Note that with the rotational movement of the handle 16 both the first and the second locking mechanism 6 are always simultaneously unlocked. The height adjustment of the frame 11 is thus always with the same control device 13.

It is understood that both locking mechanisms are necessary. The first locking mechanism 5 is necessary because at low height positions and thus small angles of the legs 7, there is insufficient horizontal displacement. In other words, there is insufficient distance for providing grooves 24 in the frame 11 at small angles between the legs 7.

In turn, the second locking mechanism 6 is important as the elevation 10 of the chassis 2 next to the platform 4 is limited. With greater height positions there is thus no hole 23 in which the rod 14 could ensure a lock.

It is understood that the invention is not limited to seven different height positions.

The present invention is by no means limited to the embodiments described as an example and shown in the drawings, but a tube rail cart according to the invention can be realised in all kinds of forms and dimensions, without departing from the scope of the invention.

## Claims

1. Tube rail cart comprising a chassis (2) and scissor lift (3) mounted thereon with a manually height-adjustable platform (4) between a lowered position with minimum height and an extended position with maximum height and which is provided with a lock for locking the platform (4) in several height positions, **characterised in that** the lock comprises two different locking mechanisms, respectively a first locking mechanism (5) for locking the platform (4) in an intermediary position between the lowered position and the extended position and a second locking mechanism (6) for locking the platform (4) in the extended position.

2. Tube rail cart according to claim 1, **characterised in that** the platform (4) is lockable in one or more height positions between the intermediary position and the lowered position using the first locking mechanism (5).

3. Tube rail cart according to claim 1 or 2, **characterised in that** the platform (4) is lockable in one or more height positions between the intermediary position and the extended position using the second locking mechanism (6).

4. Tube rail cart according to any one of the previous claims, **characterised in that** the first and the second locking mechanism (6) are controlled by one and the same control device (13).

5. Tube rail cart according to any one of the previous claims, **characterised in that** the number of different height positions, preferably is located between two and fifteen, ideally the platform can be locked in seven different height positions.

6. Tube rail cart according to claim 5, **characterised in that** in the case of seven different height positions, the first three height positions, starting with the lowered position, are lockable with the first locking mechanism (5) and that the other four height positions are lockable with the second locking mechanism (6).

7. Tube rail cart according to any one of the previous claims, **characterised in that** the scissor lift (3) is formed by two pairs of legs (7) which are each hingeably connected to each other around a centrally located pivotal point (8) and whereby two of the lower ends of the scissor lift (3) are hingeably connected to the chassis (2) whereas the two other lower ends are provided with a slider or roller guide (9) for moving on the chassis (2) and whereby the platform (4) is mounted freely hingeably on two of the upper ends of the legs (7).

8. Tube rail cart according to any one of the previous claims, **characterised in that** the platform (4) is hingeable around the upper ends of the legs (7) which are hingeably connected to the chassis (2).

9. Tube rail cart according to any one of the previous claims, **characterised in that** the scissor lift (3) is provided next to an elevation (10) of the chassis (2).

10. Tube rail cart according to any one of the previous claims 4 to 9, **characterised in that** the control device (13) comprises a rod (14) whose thickened end (15) is enclosed in a rotatable handle (16), whereby said thickened end (15) in the extension of the rod (14) is provided with a peg (17) over which a spring (18) is mounted which is tensioned in a chamber (19) of the handle (16) of the rod (14) and whereby the rotational movement of the handle (16) and the thickened end (15) of the rod (14) are guided by one or more slots (20) in the handle (16) and the thickened end (15) which cooperate with one or more bolts (21) which can move upward and downward in openings (22) of the frame (11) provided to this end.

11. Tube rail cart according to any one of the previous claims, **characterised in that** the end of the rod (14), opposite to the end on which the handle (16) is provided, can cooperate with one or more holes (23) in the elevation (10) of the chassis (2) to form the first locking mechanism (5) .

12. Tube rail cart according to any one of the previous claims, **characterised in that** the frame (11) is provided with one or more grooves (24) which can cooperate with one or more bushings (25) which are provided on the upper ends of the legs (7) of the scissor lift (3) to form the second locking mechanism (6).

13. Tube rail cart according to any one of the previous claims, **characterised in that** the scissor lift (3) is provided with one or more gas springs (26) to help raise the platform (4) or to prevent said platform (4) from suddenly dropping when adjusting the height position.

14. Tube rail cart according to any one of the previous claims, **characterised in that** the tube rail cart (1) comprises four flanged wheels (27), of which two driven wheels and two idler wheels (30) and whereby two swivel castors (31) are provided on a width-adjustable suspension (32) which is located on the side of the idler wheels (30).

15. Tube rail cart according to any one of the previous claims, **characterised in that** the chassis (2) and/or the platform (4) is/are provided with one or more tubes (33) for mounting attachments (34) which are necessary for harvesting crops, pruning activities and the like, such as one or several leaf sliders (35).

## Patentansprüche

1. Rohrschienenwagen, der ein Fahrgestell (2) und eine darauf montierte Scherenhebebühne (3) umfasst, die eine manuell höhenverstellbare Plattform (4) zwischen einer abgesenkten Position mit minimaler Höhe und einer ausgefahrenen Position mit maximaler Höhe umfasst, die mit einer Verriegelung zum Verriegeln der Plattform (4) in mehreren Höhenpositionen versehen ist, **dadurch gekennzeichnet, dass** die Verriegelung zwei verschiedene Verriegelungsmechanismen umfasst, nämlich einen ersten Verriegelungsmechanismus (5) zum Verriegeln der Plattform (4) in einer Zwischenposition zwischen der abgesenkten Position und der ausgefahrenen Position und einen zweiten Verriegelungsmechanismus (6) zum Verriegeln der Plattform (4) in der ausgefahrenen Position.

2. Rohrschienenwagen nach Anspruch 1, **dadurch gekennzeichnet, dass** die Plattform (4) mit dem ersten Verriegelungsmechanismus (5) in einer oder mehreren Höhenpositionen zwischen der Zwischenposition und der abgesenkten Position verriegelbar ist.

3. Rohrschienenwagen nach Anspruch 1 oder 2, **dadurch gekennzeichnet, dass** die Plattform (4) mit dem zweiten Verriegelungsmechanismus (6) in einer oder mehreren Höhenpositionen zwischen der Zwischenposition und der ausgefahrenen Position verriegelbar ist.

4. Rohrschienenwagen nach einem der vorhergehenden Ansprüche, **dadurch gekennzeichnet, dass** der erste und der zweite Verriegelungsmechanismus (6) durch ein und dieselbe Steuereinrichtung (13) gesteuert werden.

5. Rohrschienenwagen nach einem der vorhergehenden Ansprüche, **dadurch gekennzeichnet, dass** die Anzahl der verschiedenen Höhenpositionen vorzugsweise zwischen zwei und fünfzehn liegt, idealerweise kann die Plattform in sieben verschiedenen Höhenpositionen verriegelt werden.

6. Rohrschienenwagen nach Anspruch 5, **dadurch gekennzeichnet, dass** bei sieben verschiedenen Höhenpositionen die ersten drei Höhenpositionen, beginnend mit der abgesenkten Position, mit dem ersten Verriegelungsmechanismus (5) verriegelbar sind und dass die anderen vier Höhenpositionen mit dem zweiten Verriegelungsmechanismus (6) verriegelbar sind.

7. Rohrschienenwagen nach einem der vorhergehenden Ansprüche, **dadurch gekennzeichnet, dass** die Scherenhebebühne (3) durch zwei Paare von Schenkeln (7) gebildet ist, die jeweils um einen mittig angeordneten Drehpunkt (8) gelenkig miteinander verbunden sind und wobei zwei der unteren Enden der Scherenhebebühne (3) gelenkig mit dem Fahrgestell (2) verbunden sind, während die beiden anderen unteren Enden mit einer Gleit- oder Rollenführung (9) zur Bewegung auf dem Fahrgestell (2) versehen sind und wobei die Plattform (4) frei gelenkig an zwei der oberen Enden der Schenkel (7) angebracht ist.

8. Rohrschienenwagen nach einem der vorhergehenden Ansprüche, **dadurch gekennzeichnet, dass** die Plattform (4) um die oberen Enden der Schenkel (7), die gelenkig mit dem Fahrgestell (2) verbunden sind, klappbar ist.

9. Rohrschienenwagen nach einem der vorhergehenden Ansprüche, **dadurch gekennzeichnet, dass** die Scherenhebebühne (3) neben einer Erhebung (10) des Fahrgestells (2) vorgesehen ist.

10. Rohrschienenwagen nach einem der vorhergehenden Ansprüche 4 bis 9, **dadurch gekennzeichnet, dass** die Steuervorrichtung eine Stange (14) umfasst, deren verdicktes Ende (15) von einem drehbaren Griff (16) umschlossen ist, wobei das verdickte Ende (15) in der Verlängerung der Stange (14) mit einem Zapfen (17) versehen ist, über den eine Feder (18) montiert ist, die in einer Kammer (19) des Griffs (16) der Stange gespannt ist und wobei die Drehbewegung des Griffs (16) und des verdickten Endes (15) der Stange (14) durch einen oder mehrere Schlitze (20) in dem Griff (16) und dem verdickten Ende (15) geführt werden, die mit einem oder mehreren Bolzen (21) zusammenwirken, die sich in Öffnungen (22) des an diesem Ende vorgesehenen Rahmens (11) nach oben und unten bewegen können.

11. Rohrschienenwagen nach einem der vorhergehenden Ansprüche, **dadurch gekennzeichnet, dass** das Ende der Stange (14), das dem Ende, an dem der Griff (16) vorgesehen ist, gegenüberliegt, mit einem oder mehreren Löchern (23) in der Erhöhung (10) des Fahrgestells (2) zusammenwirken kann, um den ersten Verriegelungsmechanismus (5) zu bilden.

12. Rohrschienenwagen nach einem der vorhergehenden Ansprüche, **dadurch gekennzeichnet, dass** der Rahmen (11) mit einer oder mehreren Nuten (24) versehen ist, die mit einer oder mehreren Buchsen (25) zusammenwirken können, die an den oberen Enden der Schenkel (7) der Scherenhebebühne (3) vorgesehen sind, um den zweiten Verriegelungsmechanismus (6) zu bilden.

13. Rohrschienenwagen nach einem der vorhergehenden Ansprüche, **dadurch gekennzeichnet, dass** die Scherenhebebühne (3) mit einer oder mehreren Gasfedern (26) versehen ist, um das Anheben der Plattform (4) zu unterstützen oder ein plötzliches Absinken der Plattform (4) beim Einstellen der Höhenposition zu verhindern.

14. Rohrschienenwagen nach einem der vorhergehenden Ansprüche, **dadurch gekennzeichnet, dass** der Rohrschienenwagen (1) vier Spurkranzräder (27) aufweist, von denen zwei Antriebsräder und zwei Losräder (30) sind und wobei zwei Lenkrollen (31) an einer breitenverstellbaren Aufhängung (32) vorgesehen sind, die sich auf der Seite der Losräder (30) befindet.

15. Rohrschienenwagen nach einem der vorhergehenden Ansprüche, **dadurch gekennzeichnet, dass** das Fahrgestell (2) und/oder die Plattform (4) mit einem oder mehreren Rohren (33) zur Aufnahme von Anbaugeräten (34) versehen ist/sind, die für Erntearbeiten, Schnittarbeiten und dergleichen erforderlich sind, wie z. B. einem oder mehreren Blattschiebern (35).

## Revendications

1. Chariot sur rail tubulaire qui comprend un châssis (2) et une plate-forme élévatrice (3) montée sur ce dernier comprenant un dispositif de levage à ciseaux (4) qui peut être réglé manuellement en hauteur entre une position abaissée correspondant à une hauteur minimale et une position déployée correspondant à une hauteur maximale, et qui est équipée d'un dispositif de verrouillage pour verrouiller la plate-forme (4) dans plusieurs positions en hauteur, **caractérisé en ce que** le dispositif de verrouillage comprend deux mécanismes de verrouillage différents, respectivement un premier mécanisme de verrouillage (5) pour le verrouillage de la plate-forme (4) dans une position intermédiaire entre la position abaissée et la position déployée et un deuxième mécanisme de verrouillage (6) destiné au verrouillage de la plate-forme (4) dans la position déployée.

2. Chariot sur rail tubulaire selon la revendication 1, **caractérisé en ce que** la plate-forme (4) peut être verrouillée dans une ou plusieurs positions en hauteur entre la position intermédiaire et la position abaissée, en utilisant le premier mécanisme de verrouillage (5).

3. Chariot sur rail tubulaire selon la revendication 1 ou 2, **caractérisé en ce que** la plate-forme (4) peut être verrouillée dans une ou plusieurs positions en hauteur entre la position intermédiaire et la position déployée, en utilisant le deuxième mécanisme de verrouillage (6).

4. Chariot sur rail tubulaire selon l'une quelconque des revendications précédentes, **caractérisé en ce que** le premier et le deuxième mécanisme de verrouillage (6) sont commandés par un seul et même dispositif de commande (13).

5. Chariot sur rail tubulaire selon l'une quelconque des revendications précédentes, **caractérisé en ce que** le nombre de positions différentes en hauteur est de préférence situé entre deux et quinze ; idéalement, la plate-forme peut être verrouillée dans sept positions différentes en hauteur.

6. Chariot sur rail tubulaire selon la revendication 5, **caractérisé en ce que**, dans le cas des sept positions différentes en hauteur, les trois premières positions en hauteur, en partant de la position abaissée, peuvent être verrouillées avec le premier mécanisme de verrouillage (5), et **en ce que** les quatre autres positions en hauteur peuvent être verrouillées avec le deuxième mécanisme de verrouillage (6).

7. Chariot sur rail tubulaire selon l'une quelconque des revendications précédentes, **caractérisé en ce que** le mécanisme de levage à ciseaux (3) est réalisé par l'intermédiaire de deux paires de branches (7) qui sont chacune reliées en articulation l'une à l'autre autour d'un point de pivot (8) disposé en position centrale, et dans lequel deux des extrémités inférieures du mécanisme de levage à ciseaux (3) sont reliées en articulation au châssis (2), tandis que les deux autres extrémités inférieures sont équipées d'un coulisseau ou d'un guidage à galets (9) à des fins de déplacement sur le châssis (2), et dans lequel la plate-forme (4) est montée en articulation libre sur deux des extrémités supérieures des branches (7).

8. Chariot sur rail tubulaire selon l'une quelconque des revendications précédentes, **caractérisé en ce que** la plate-forme (4) peut être articulée autour des extrémités supérieures des branches (7) qui sont reliées en articulation au châssis (2).

9. Chariot sur rail tubulaire selon l'une quelconque des revendications précédentes, **caractérisé en ce que** le dispositif de levage à ciseaux (3) est prévu à côté d'une élévation (10) du châssis (2).

10. Chariot sur rail tubulaire selon l'une quelconque des revendications précédentes 4 à 9, **caractérisé en ce que** le dispositif de commande (13) comprend une barre (14) dont l'extrémité épaissie (15) est encastrée dans une poignée rotative (16) ; dans lequel ladite extrémité épaissie (15), dans le prolongement de la barre (14), est équipée d'une cheville (17) par-dessus laquelle est monté un ressort (18) qui est mis sous tension dans une chambre (19) de la poignée (16) de la barre (14) ; et dans lequel le mouvement rotatif de la poignée (16) et de l'extrémité épaissie (15) de la barre (14) est guidé par une ou plusieurs fentes (20) pratiquées dans la poignée (16) et dans l'extrémité épaissie (16), qui coopèrent avec un ou plusieurs boulons (21) qui peuvent se déplacer vers le haut et vers le bas dans des ouvertures (22) du cadre (11) prévues à cet effet.

11. Chariot sur rail tubulaire selon l'une quelconque des revendications précédentes, **caractérisé en ce que** l'extrémité de la barre (14), à l'opposé de l'extrémité sur laquelle on prévoit la poignée (16), peut coopérer avec un ou plusieurs trous (23) pratiqués dans l'élévation (10) du châssis (2) dans le but de former le premier mécanisme de verrouillage (5).

12. Chariot sur rail tubulaire selon l'une quelconque des revendications précédentes, **caractérisé en ce que** le cadre (11) est muni d'une ou plusieurs rainures (24) qui peuvent coopérer avec une ou plusieurs douilles (25) qui sont prévues sur les extrémités supérieures des branches (7) du dispositif de levage à ciseaux (3) dans le but de former le deuxième mécanisme de verrouillage (6).

13. Chariot sur rail tubulaire selon l'une quelconque des revendications précédentes, **caractérisé en ce que** le dispositif de levage à ciseaux (3) est équipé d'un ou de plusieurs ressorts à gaz (26) afin de faciliter le soulèvement de la plate-forme (4) ou afin d'empêcher ladite plate-forme (4) de chuter d'une manière soudaine lors du réglage de la position en hauteur.

14. Chariot sur rail tubulaire selon l'une quelconque des revendications précédentes, **caractérisé en ce que** le chariot sur rail tubulaire (1) comprend quatre roues à brides (27), dont deux roues motrices et deux roues intermédiaires (30) ; et dans lequel deux roulettes pivotantes (31) sont prévues sur une suspension (32) qui peut être réglée sur sa largeur, qui est disposée sur le côté des roues intermédiaires (30).

15. Chariot sur rail tubulaire selon l'une quelconque des revendications précédentes, **caractérisé en ce que** le châssis (2) et/ou la plate-forme (4) est/sont équipé(s) d'un ou de plusieurs tubes (33) qui sont destinés au montage de dispositifs de fixation (34) qui sont nécessaires pour la récolte de cultures, des activités d'élagage et analogues, sous la forme d'un ou de plusieurs coulisseaux à lames (35).
